# EUROPEAN PATENT SPECIFICATION

(11) **EP 1 020 809 B1**
(45) Date of publication and mention of the grant of the patent: **22.12.2004**
(21) Application number: 99250451.4
(22) Date of filing: 28.12.1999
(51) Int. Cl.: G06F 17/60

(54) **Electronic tender system**
Elektronisches System zum Vorlegen von Angeboten
Système électronique pour faire des offres réelles

(30) Priority: 28.12.1998 JP 37483398
(43) Date of publication of application: 19.07.2000
(73) Proprietor: NEC CORPORATION, Tokyo (JP)
(72) Inventor: Sako, Kazue, Minato-ku, Tokyo (JP)
(74) Representative: Patentanwälte Wenzel & Kalkoff

(56) References cited:
- WO-A-97/25801
- US-A- 6 055 518
- FRANKLIN M K ET AL: "The design and implementation of a secure auction service" IEEE TRANSACTIONS ON SOFTWARE ENGINEERING, MAY 1996, IEEE, USA, vol. 22, no. 5, pages 302-312, XP002221603 ISSN: 0098-5589
- KIKUCHI H ET AL.: "Multi-round anonymous auction protocols" IEEE FIRST WORKSHOP ON DPENDABLE AND REALTIME E-COMMERCE SYSTEMS, [Online] June 2002 (2002-06), page 62-69 XP002221604 Retrieved from the Internet: <URL:http://citeseer.nj.nec.com/context/13 17518/505415> [retrieved on 2002-11-20]
- CATALANO D ET AL: "New efficient and secure protocols for verifiable signature sharing and other applications" JOURNAL OF COMPUTER AND SYSTEM SCIENCES, AUG. 2000, ACADEMIC PRESS, USA, vol. 61, no. 1, pages 51-80, XP002221605 ISSN: 0022-0000

## Description

### Background of the Invention:

The present invention relates to an electronic tender system, as defined in claim 1.

As known from Japanese Patent Laid-Open No.HEI2-118876, for example, such electronic tender system adopts a coding technology, because the bidding price information should be kept secret generally until the tender opening. The coded bidding price information is decoded all at once at the tender opening, to decide the highest or the lowest bidding price among them as the contract price. There, the announcement of all bidding prices allows everyone to confirm that the contact price has been decided correctly, in other words, it was the highest or the lowest price among the bidding prices.

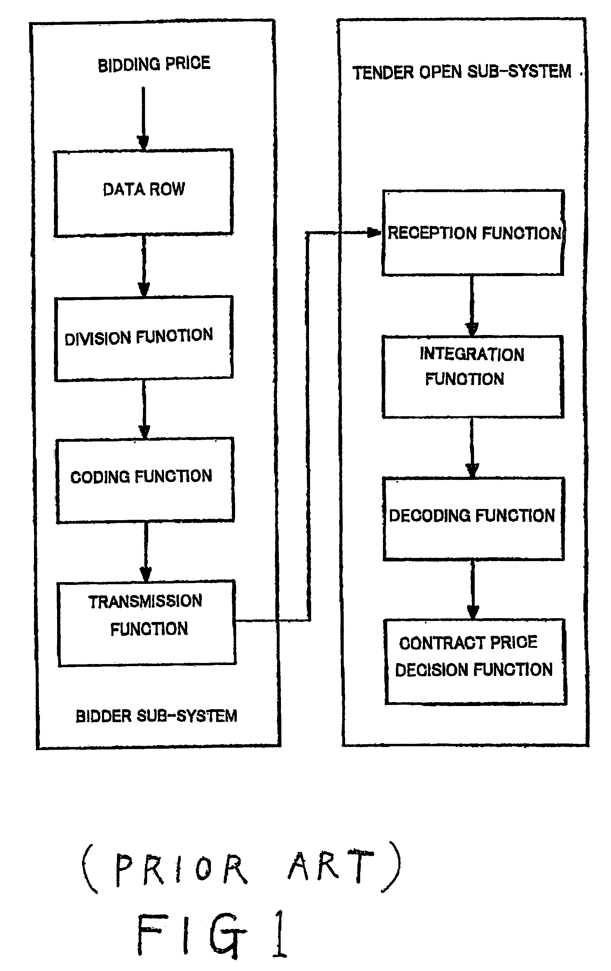

Recently, it is demanded not to publish the bidding price not accepted as the contract price, in view of privacy protection. To meet this requirement, for example, an approach has been disclosed in an article, "Multi-round Anonymous Auction Protocols" by Kikuchi, Harkavy and Tyger, published in "IEEE Workshop on Dependable and Real-time E-Commerce System". This approach disclosed in the prior art literature is shown in Fig. 1.

In this approach, the bidder creates a data row corresponding to his bidding price and encodes each data respectively. The opener receives code string data transmitted by all bidders, integrates and then decodes them to decide the contract price. In this approach, as the code string data of individual bidder is not decoded, the bidding price of respective bidder can be kept secret, and at the same time, the identification information of the highest price bidder can be extracted, by integrating code string data of all bidders.

Now, the principle of identification extraction will be described. A bidder having an identification information IDi, creates a data row corresponding to his bidding price as follows. Suppose the tender reception range be (a, b) and his bidding price a + v (<b) , then (v + 1) times x ID_I are enumerated. Next, 0 are enumerated b - (a + v) times. Thus, a data row containing (b - a + 1) elements is generated.

A data row where respective elements of the data row are added by each element is output, by integrating data rows from all bidders generated in this way. In this data row, suppose the element where 0 appears first be t th, the highest bidding price (contract price) is a + t - 1 , and the bidder who has the identification information indicated by the price of the t -1st element.

However, in this prior art, the bidding data becomes longer in proportion to the tender reception price range, because the data row is created in proportion to the length of the tender reception range, and then it is divided to code. Further, when a plurality of bidders have offered the contract price, it is impossible to determine the identification or the number of concerned bidders, because the decoding result of the t - 1st element is the sum of ID information of bidders of the corresponding bidding price.

WO 97 25801 A discloses the use of encryption for hiding transaction details, including a price, and its application to an electronic tender system, where the coding parameter of the merchant may be private.

M K Franklin et al, 'The design and implementation of a secure auction service', in IEEE Transactions on Software Engineering, Vol. 22, p. 302-312, May 1996, discloses the use of privacy preserving bids in tender systems. Bids are encrypted and only the winning bid is decrypted. The encryption mechanism may be based on the El Gamal method.

H Kikuchi et al, 'Multi-round anonymous auction protocols', in IEEE First Workshop on Dependable and Realtime E-Commerce systems, p. 62-69, June 2002, discloses the use of code parameter and decode parameter which are used to encode bids. Acceptance of bids is based on the encoded values and decoding is done once the tendering is closed and the winning bid is selected.

In the above cited prior art documents each bidder uses a single code parameter to encode a plurality of bidding values; a corresponding decode parameter is then used to decode the winning bid.

### Summary of the Invention:

It is therefore the object of the present invention to provide an electronic tender system with improved privacy, in particular, allowing to reduce the bidding data, and at the same time, to identify the concerned bidder even when a plurality of bidders have offered the contract price, and moreover, to keep secret the bidding information of other bidding prices than that of the successful bidder.

The electronic tender system according to the present invention is characterized by that a code parameter depending on the bidding price is delivered to the coding function section in its bidder sub-system, and, a contract price candidate selection function, and a retrieve function by the decode parameter depending on the candidate price are provided, in order to decide the contract price in its tender opening sub-system.
The introduction of these code and decode parameters realizes an effect to judge only if the bidding price is identical to the contract price candidate. Therefore, the highest or the lowest bidding price and its bidder can be decided, by judging if there is a bidding price identical to the contract price candidate, changing the contract price candidate one by one from the tender possible highest price or the lowest price, and further, how the other bidders have tendered can be concealed.

### Brief Description of the Drawings:

Fig. 1 is a block diagram for showing a conventional method;
Fig. 2 is a block diagram for showing a composition of the present invention; and
Fig. 3 is a block diagram for showing a composition of the retrieve means of the present invention.

### Detailed Description of the Preferred Embodiments:

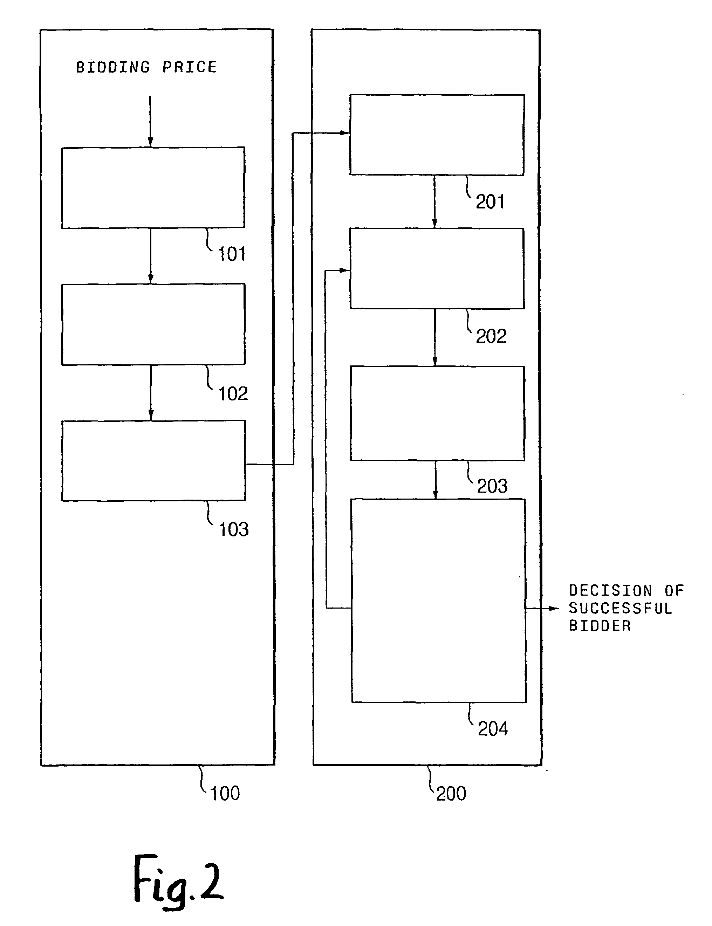

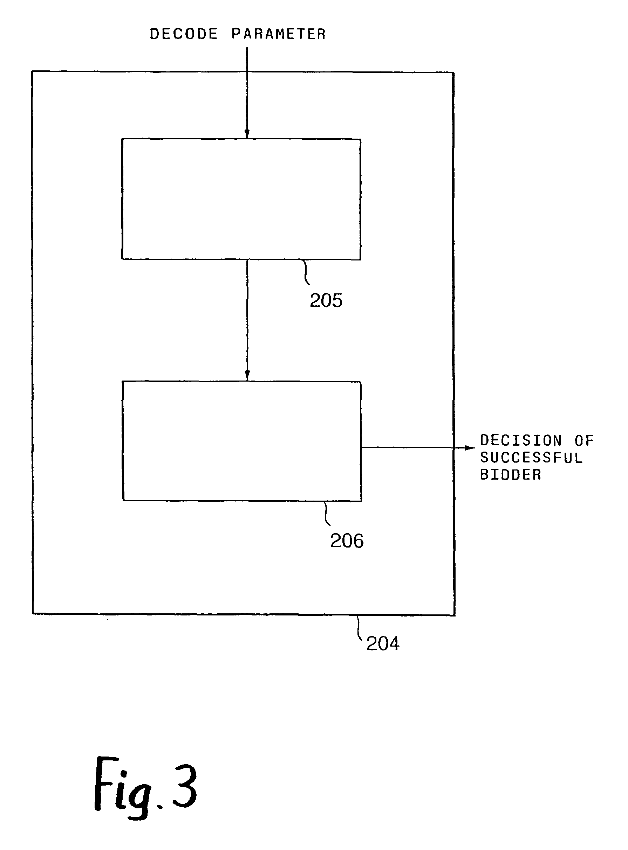

Referring now to Figs. 2 and 3, description will proceed to an electronic tender system according to a preferred embodiment of the present invention.

Fig. 2 is a block diagram showing an embodiment of the present invention. The electronic tender system according to the present invention comprises a bidder sub-system 100 and a tender opening sub-system 200. The bidder sub-system 100 includes a code parameter acquisition means 101and a coding means 102, while the tender opening sub-system 200 includes a reception means 201, a contract price candidate selection means 202, a decode parameter acquisition means 203 and a retrieve means 204.

The retrieve means 204 includes, as shown in Fig. 3, a decoding means 205 and a judgement means 206, and the decoding means 205 decodes sequentially coded bidding prices received by the reception means 201 based on the decode parameter acquired by the decode parameter acquisition means 203, while the judgement means 206 judges that the coded bidding price is identical to the contract price candidate selected by the selection means 202, in the case when the decoding result by the decoding means 205 becomes a fixed value.

Note that, in this embodiment, to simplify the description, it is supposed, hereinafter, that a bidder sub-system that has offered the highest price, among bid prices, will be decided as the successful bidder, though it is similar in the case where the lowest price will be the contract price.

The input to the bidder sub-system 100, is the bidding price desired by this the bidder sub-system. The bidding price bid in this bidder sub-system 100 is delivered to the code parameter acquisition means 101. In the code parameter acquisition means 101, the code parameter necessary for the coding means 102 depending on this bidding price is acquired and delivered to the coding means 102. The coding means 102 performs the coding operation based on the supplied code parameter, and delivers the coded bidding data to the transmission means 103. The transmission means 103, transmits the coded bidding data to the reception means 201 of the tender opening sub-system 200.

The reception means 201 of the tender opening sub-system 200, receives the coded bidding data sent from respective bidder sub-system 100, directs the contract price candidate selection means 202 to start the tender opening on the tender opening day. The contract price candidate selection means 202 directed to open the tender, first, takes the highest price within the acceptable range as the candidate price, and supplies the decode parameter acquisition means 203 with this candidate price.

The decode parameter acquisition means 203, acquires this decode parameter depending on this candidate price, and delivers to the retrieve means 204. The retrieve means 204, decodes all coded bidding data received using the supplied decode parameter, in the decoding means 205, and retrieves if there is a bidding price same as the candidate price among the coded bidding data by the judgement means 206. If it is the case, the bidder sub-system that has sent that coded bidding data will be accepted. If there is no coded bidding data created taking this candidate price as bidding price, the retrieve means 204, outputs that the concerned candidate price is not the contract price to the contract price selection means 202.

Upon reception of a non candidate signal from the retrieve means 204, the contract price selection means 202, takes the next lower price than the current candidate price as a new candidate price, and delivers it to the decode parameter acquisition means 203. Then, the similar operation will be repeated until the judging means 206 decides a successful bidder, or the candidate price becomes lower than the tender possible range. If the candidate price becomes lower than the tender possible range, it is judged that no bidding is accepted, and this result is output before terminating the processing.

Now, as an example of this embodiment, the case where El Gamal code is used as coding function will be described. The El Gamal code being well known by those skilled in the art and irrelevant to the present invention, its detailed explanation will be omitted.

First, the tender opening system creates a large prime p and a generator g. Besides, it decides a secret key x (y) a public key y (v) and a constant M (v) for respective bidding price v. Here, the secret key x (v) and the public key y (v) present the following relation. M (v) may be an arbitrary value, and for example, v and its hash value can be linked as M (v), or it well may be a constant independent of v. As code parameters, M (v) and y (v) are adopted and as decode parameter x (v). The code parameters are published, while the decode parameters are severely controlled in the tender opening sub-system.

The bidder sub-system 100, obtains code parameters, M (v) and y (v), for a bidding price v it desires, and codes M (v) with the public key y (v) based on the El Gamal code. The El Gamal code, belonging to the code type called probabilistic encryption, is known to produce a different coded message even if the same M (v) is coded. The bidder sub-system 100 sends this coding result to the tender opening system 200 as coded bidding data C (v).

The tender opening sub-system 200 obtains a decode parameter x (v') for a contract price candidate v' and decodes C (v) using this decode parameter as secret key. There, if v = v', obviously the decoding result will be M(v) = M (v'). On the contrary, if v ≠ v', the decoding result will hardly be M(v'). Thus, without obtaining the bidding price, it can be judged if it is equal to the contract price candidate.

If the contract price is decided to be v, all offered coded bidding prices, and the decode parameter x (v) corresponding the possible bidding price equal to or larger than v are published by the announcement means. Therefore, everyone can verify that there was no bidding price larger than v and who has bid the contract price, as they can try to decode all offered code bidding prices using this announced decode parameter.

On the other hand, bidding prices inferior to the contract price can be concealed, as the decode parameter x (v) corresponding to the bidding prices inferior to the contract price is not published. Further, problems in the case where a plurality of successful bidders exist as in the conventional method will not occur, because all bidding sub-systems will be identified, even when obviously a plurality of bidding sub-systems have offered the contract price.

As a specific embodiment, now a case where RSA code is used for coding function will be described. The detailed description of RSA code will be omitted as it is well known by those skilled in the art and not relevant to the present invention. For RSA coding, code parameter y (v) is generated automatically from the bidding price v, without table lookup, and moreover, the fixed value M (v) to be coded may not be fixed for all bidders.

First, the tender opening system generates large primes p and q, and supposes n their product. The bidder sub-system generates as follows the code parameter M (v), y (v), for the bidding price v it wishes. That it to say, it generates random numbers, and makes M (v) be the concatenation of v, and this random number, and the hash value where they are coupled. Next, supposing y (v), 1 is concatenated with the hash value of v, making it prime to (p-1)(q-1) each other.

Then, M (v) is codified with the public key y (v) based on RSA code of the modulus n. In this case, as different random numbers are generated for respective bidder, different coded messages are generated even if a same v is coded. The bidder sub-system transmits this coding result to the tender opening system 200 as coded bidding data C (v).

The tender opening system 200 calculates y (v') for a contract price candidate v', namely it hash value, and calculates x (v') that is the inverse element of y (v') in the modulus (p-1)(q-1), as decode parameter. Then, C (v) is decoded in the modulus n taking this code parameter as secret key.

Here, if v = v' , obviously, the decoding result M (v') will be a correct format by v' and a certain random number. On the other hand, if v ≠ v', the decoding result will hardly be such format. Thus, without obtaining the bidding price it-self, it can be judged if it is equal to the contract price candidate.

If the contract price is decided to be v, all offered code bidding prices, and respective result of decoding by the decode parameter x (v) corresponding the tender possible price equal to or larger than v are published by the announcement means. Therefore, everyone can verify that there was no bidding price larger than v and who has bid the contract price, as they can confirm that the result coded by the code parameter y (v') corresponding to the contact price candidate is equal to offered respective code bidding prices, using this announced decode parameter.

On the other hand, bidding prices inferior to the contract price can be concealed, as the decoding result corresponding to the bidding prices inferior to the contract price is not published. Further, problems in the case where a plurality of successful bidders exist as in the conventional method will not occur, because all bidding sub-systems will be identified, even when obviously a plurality of bidding sub-systems have offered the contract price.

Moreover, it is assured that code bidding prices to be input into the tender opening system excludes those outside the bidding period, by publishing code bidding prices received before the bidding deadline, and opening only those published ones. As it is irrelevant to the present invention, the detailed description thereof will be omitted.

Additionally, it can be assured that the tender opening system will not decode illegally the code bidding price, by controlling or generating the decode parameter with a plurality of sub-systems, using distributed secret or group decryption technology or the like. As it is also irrelevant to the present invention, the detailed description thereof will be omitted.

Beside, a digital signature of the code bidding price can be added, in order to prevent the bidder bidding in the name of the other, or denying later the transmitted code bidding price; however, as it is also irrelevant to the present invention, the detailed description thereof will be omitted.

In this embodiment, to simplify, the case where a bidding sub-system that has offered the highest price, among bid prices, will be decided as the successful bidder has been described in detail; however, similarly, it can easily be applied to the case wherein the lowest price will be the contract price, or to the case wherein a plurality, of bidding sub-system that have offered a bidding price close to the highest price or the lowest price.

It is to be understood that the present invention is not limited to the aforementioned respective embodiments, and obviously, the respective embodiments can be executed by conveniently modifying them, without departing from the technical concept of the present invention as defined by the appended claims.

As described hereinbefore, according to the present invention, it is possible to provide an electronic tender system, allowing to select the bidder who has offered the highest or the lowest price as successful bidder and moreover, to keep secret the bidding information of other bidding prices than that of the successful bidder, based on a basic composition wherein the bidder sub-system codes by means of a code parameter depending on the bidding price, and the tender opening system decodes by a decode parameter depending on the contract price candidate.

## Claims

1. An electronic tender system for accepting as contract value the highest or lowest value among bidding values offered by a plurality of tenders, comprising :
a bidder sub-system (100) including a code parameter acquisition means (101) for taking as input a bidding value v selected within a tenderable range (a,b), and for acquiring a code parameter y(v) depending on the bidding value v as well as a value M(v) corresponding to the bidding value v a code processing means (102) for coding the value M(v) using the code parameter y(v) resulting is a coded value c(v), and a transmission means (103) for sending the coded value C(v) to a tender opening sub-system, and
a tender opening sub-system (200) including a reception means (201) for receiving said coded bidding values C(v) until the closing day, a selection means (202) for selecting sequentially a contract value candidate v' from the highest, the next lower, and so on, or the lowest among the acceptable bidding values, a decode parameter acquisition means (203) for acquiring a decode parameter x(y') corresponding to the contract value candidate v', and a retrieve means (204) which includes a decoding means (205) for sequentially decoding said coded bidding values C(v) using the decode parameter x(v') resulting in a decoded value M(v), and a judgement means (208) for judging that the corresponding bidding value v is identical to the contract value candidate v' in the case where the decoded value M(v) is equal to a value M(v') corresponding to said contract value candidate v', and for retrieving if a bidding value v same as the contract value, candidate v' exists among said decoded bidding values M(v).

2. The electronic tender system as claimed in claim 1 wherein the code processing means (102) is provided for coding a fixed value M(v) using a public key y(v) corresponding to said bidding value v, and the decoding means (205) is provided for decoding said coded bidding values C(v) with a secret key x(v') corresponding to a public key y(v') corresponding to the contract value candidate v'.

3. The electronic tender system as claimed in anyone of claims 1 or 2, wherein said tender opening system (200) includes an output means for outputting a decode parameter x(v) acquired in the decode parameter acquisition means (203) or decoding results obtained in the retrieve means (204) for each contract value candidate v'.

4. Electronic tender system as claimed in one of claims 1 to 3, wherein the value M (v) is depending on the bidding value v.

5. Electronic tender system as claimed in one of claims 1 to 3, wherein the value M (v) is a constant independent of the bidding value v.

## Patentansprüche

1. Elektronisches Angebotssystem zum Annehmen des höchsten oder niedrigsten Wertes unter von einer Mehrzahl Bieter gebotenen Gebotswerten als Vertrags- oder Zuschlagwert, umfassend:
ein Bieter-Subsystem (100), das ein Codeparameter-Erfassungsmittel (101), um einen innerhalb eines Gebotsbereiches (a, b) ausgewählten Gebotswert v als Eingang aufzunehmen und um einen von dem Gebotswert v abhängigen Codeparameter y (v) ebenso wie einen dem Gebotswert v entsprechenden Wert M (v) zu erfassen, ein Codebearbeitungsmittel (102) zum Kodieren des Wertes M (v) unter Verwendung des Codeparameters y (v), was zu einem kodierten Wert C (v) führt, und ein Übertragungsmittel (103) zum Aussenden des kodierten Wertes C (v) an ein Angebotseröffnungs-Subsystem einschließt, und
ein Angebotseröffnung-Subsystem (200), das ein Empfangsmittel (201) zum Empfangen der kodierten Gebotswerte C (v) bis zum Schlußtag, ein Auswahlmittel (202) zum sequentiellen Auswählen eines Zuschlagswertkandidaten v' aus dem höchsten, dem nächst niedrigeren usw. oder dem niedrigsten der annehmbaren Gebotswerte auszuwählen, ein Dekodierparameter-Erfassungsmittel (203) zum Erfassen eines dem Vertrags- oder Zuschlagwertkandidaten v' entsprechenden Dekodierparameters x (v') und ein Abruf- bzw. Wiedergewinnungs(retrieval)-mittel (204) einschließt, das ein Dekodiermittel (205) zum sequentiellen Dekodieren der kodierten Gebotswerte C(v) unter Verwendung des Dekodierparameters x (v'), was zu einem dekodierten Wert M (v) führt, und ein Beurteilungsmittel (208) einschließt, um zu beurteilen, ob der ensprechende Gebotswert v identisch mit dem Vertrags- oder Zuschlagswertkandidaten v' in dem Falle ist, in dem der dekodierte Wert M (v) gleich einem Wert M (v') ist, der dem Vertrags- oder Zuschlagswertkandidaten v' entspricht, und das zum Abrufen dient, wenn ein Gebotswert v gleich dem Vertrags- oder Zuschlagswertkandidaten v' unter den dekodierten Gebotswerten M (v) existiert.

2. Elektronisches Angebotssystem nach Anspruch 1, bei dem das Codebearbeitungsmittel (102) zum Kodieren eines festen Wertes M (v) unter Verwendung eines öffentlichen Schlüssels y (v) entsprechend dem Gebotswert v und das die Dekodiermittel (205) zum Dekodieren der kodierten Gebotswerte C (v) mit einem einem öffentlichen Schlüssel y (v') entsprechenden Geheimschlüssel x (v') entsprechend dem Vertrags- oder Zuschlagswertkandidaten v' vorgesehen ist.

3. Elektronisches Angebotssystem nach einem der Ansprüche 1 oder 2, bei dem das Angebotseröffnung-System (200) ein Ausgabemittel zum Ausgeben eines Dekodierparameters x (v), der in dem Dekodierparameter-Erfassungsmittel (203) erfaßt ist, oder zum Dekodieren von Ergebnissen, die man in dem Abruf- bzw. Wiedergewinnungsmittel (204) für jeden Vertrags- oder Zuschlagswertkandidaten v' erhalten hat, einschließt.

4. Elektronisches Angebotssystem nach einem der Ansprüche 1 bis 3, bei dem der Wert M (v) von dem Gebotswert v abhängt.

5. Elektronisches Angebotssystem nach einem der Ansprüche 1 bis 3, bei dem der Wert M (v) eine von dem Gebotswert v unabhängige Konstante ist.

## Revendications

1. Système électronique pour faire des offres réelles pour accepter comme valeur de contrat la valeur la plus élevée ou la moins élevée parmi des valeurs d'offres proposées par une pluralité d'offres, comprenant:
un sous-système de soumission d'offres (100) comprenant un moyen d'acquisition de paramètre de code pour prendre comme entrée une valeur d'offre v sélectionnée dans une plage soumissionnable (a, b) et pour acquérir un paramètre de code y(v) en fonction de la valeur d'offre v, ainsi que d'une valeur M(v) correspondant à la valeur d'offre v, un moyen de traitement de code (102) pour coder la valeur M(v) à l'aide du paramètre de code y(v) résultant en une valeur codée C(v), et un moyen de transmission (103) pour envoyer la valeur codée C(v) à un sous-système de commencement d'offres réelles, et
un sous-système de commencement d'offres réelles (200) comprenant un moyen de réception (201) pour recevoir lesdites valeurs d'offre codées C(v) jusqu'au jour de fin, un moyen de sélection (202) pour sélectionner en séquence une valeur de contrat candidate v' à partir de la plus élevée, puis de l'offre juste inférieure, et ainsi de suite, ou la valeur la plus faible parmi les valeurs d'offres acceptables, un moyen d'acquisition de paramètre de décodage (203) pour acquérir un paramètre de décodage x(v') correspondant à la valeur de contrat candidate v', et un moyen de récupération (204) qui comprend un moyen de décodage (205) pour décoder en séquence lesdites valeurs d'offre codées C(v) à l'aide du paramètre de décodage x(v') résultant en une valeur décodée M(v), et un moyen de jugement (208) pour juger que la valeur d'offre correspondante v est identique à la valeur de contrat candidate v' dans le cas où la valeur décodée M(v) est égale à une valeur M(v') correspondant à ladite valeur de contrat candidate v', et pour récupérer la valeur, si une valeur d'offre v identique à la valeur de contrat candidate v' existe parmi lesdites valeurs d'offre décodées M(v).

2. Système électronique pour faire des offres réelles, tel que revendiqué dans la revendication 1, dans lequel le moyen de traitement de code (102) est proposé pour coder une valeur fixée M(v) à l'aide d'une clé publique y(v) correspondant à ladite valeur d'offre v, et le moyen de décodage (205) est proposé pour décoder lesdites valeurs d'offre codées C(v) avec une clé secrète x(v') correspondant à une clé publique y(v') correspondant à la valeur de contrat candidate v'.

3. Système électronique pour faire des offres réelles, tel que revendiqué dans l'une quelconque des revendications 1 ou 2, dans lequel ledit système de commencement d'offres réelles (200) comprend un moyen de sortie pour délivrer un paramètre de décodage x(v) acquis dans le moyen d'acquisition de paramètre de décodage (203) ou décoder des résultats obtenus dans le moyen de récupération (204) pour chaque valeur de contrat candidate v'.

4. Système électronique pour faire des offres réelles, tel que revendiqué dans l'une des revendications 1 à 3, dans lequel la valeur M(v) dépend de la valeur d'offre v.

5. Système électronique pour faire des offres réelles tel que revendiqué dans l'une des revendications 1 à 3, dans lequel la valeur M(v) est une constante indépendante de la valeur d'offre v.
